# FASCICULE DE BREVET EUROPEEN

(11) **EP 2 868 571 B1**
(45) Date de publication et mention de la délivrance du brevet: **07.02.2018**
(21) Numéro de dépôt: 14003440.6
(22) Date de dépôt: 07.10.2014
(51) Int. Cl.: B64C 1/18, B64D 1/22, B64C 1/00, B64C 27/04

(54) **Structure de fuselage d'un giravion intégrant un plancher médian travaillant interposé entre un local habitable et un local technique**
Rumpfstruktur eines Hubschraubers mit einem lasstragenden Zwischenboden vorgesehen zwischen einem Passagier- und einem Geräteabteil
Fuselage structure of a helicopter with a load carrying median floor interposed between a passenger area and an equipment area

(30) Priorité: 05.11.2013 FR 1302560
(43) Date de publication de la demande: 06.05.2015
(73) Titulaire: Airbus Helicopters, 13725 Marignane Cedex (FR)
(72) Inventeur: Mairou, Joseph, F-13127 Vitrolles (FR); Nicola, Jean, F-13100 AIX EN Provence (FR)
(74) Mandataire: GPI & Associés

(56) Documents cités:
- DE-A1- 19 924 480
- DE-A1-102006 019 220
- FR-A- 1 530 625
- US-A- 3 966 147
- US-A1- 2009 146 010
- N.N.: "Boeing Vertol Chinook HC Mk1", Pilot Press , 1 décembre 2012 (2012-12-01), XP002726743, Extrait de l'Internet: URL:http://sobchak.files.wordpress.com/200 9/08/ch47cut.gif [extrait le 2014-07-07]

## Description

La présente invention est du domaine des fuselages pour aéronef principalement formés d'organes de raidissement d'un revêtement délimitant le volume du fuselage. La présente invention relève plus particulièrement de l'agencement structurel d'un tel fuselage d'un giravion et plus spécifiquement encore de l'agencement entre eux d'organes du fuselage travaillant mécaniquement vis-à-vis des efforts généraux auxquels le fuselage est soumis.

Dans le domaine de l'aéronautique, la structure des fuselages d'aéronefs comprend des organes raidisseurs essentiellement composés d'une part de raidisseurs longitudinaux de parois formées d'un revêtement et d'autre part de raidisseurs transversaux.

Dans le cas d'une structure de fuselage dite à coque multi-lisses, les raidisseurs longitudinaux comprennent des profilés pliés ou filés, communément désignés par lisses, qui sont fixés au revêtement. Les parois transmettent dans ce cas à la structure de fuselage la totalité des efforts généraux supportés par le fuselage, notamment en flexion et en torsion. Les raidisseurs longitudinaux comprennent en outre des longerons, la structure de fuselage étant assimilable à une poutre à âme mince.

Les raidisseurs transversaux comprennent essentiellement des cadres de forme, communément désignés par cadres forts, qui sont disposés au droit des zones d'introduction d'efforts dans la structure de fuselage. De tels cadres, pouvant être de structures et de conformations individuelles similaires ou distinctes, sont typiquement disposés successivement à distance les uns des autres suivant l'extension longitudinale du fuselage entre l'avant et l'arrière de l'aéronef.

En outre, les cadres sont exploités pour l'aménagement intérieur du fuselage en formant des supports pour des structures de cloisonnement, tels que des cloisons verticales ou des planchers techniques horizontaux. Le volume intérieur du fuselage est ainsi divisé en divers compartiments à fonction de local habitable et/ou de local technique. De telles structures de cloisonnement supportent essentiellement des efforts localisés propres à leur fonction et sont communément considérées comme des structures non travaillantes au sens des efforts généraux auxquels est soumis le fuselage.

Dans ce contexte, l'agencement de la structure du fuselage d'un aéronef est étroitement lié au type d'aéronef, avion ou giravion notamment. En effet, la structure du fuselage doit prendre en compte les efforts généraux auxquels est typiquement soumis le fuselage d'un aéronef de type donné et les missions de vol de l'aéronef qui déterminent l'agencement du fuselage et l'organisation des compartiments divisant son volume intérieur.

En ce qui concerne les giravions, les efforts généraux auxquels est soumis le fuselage sont essentiellement générés :
- ) par un ou plusieurs rotors voire encore par une ou plusieurs hélices propulsives équipant le giravion pour procurer sa portance, son guidage et/ou sa propulsion suivant de quelconques directions de progression. En effet, un giravion est typiquement équipé d'au moins un rotor principal à axe sensiblement vertical procurant au moins la sustentation du giravion et sa propulsion. L'attitude en vol du giravion peut être modifiée par un pilote opérant une variation cyclique et/ou collective du pas des pales composant la voilure tournante du rotor principal. Les giravions sont aussi équipés d'un dispositif anti-couple monté en bout d'une poutre de queue et dédié au guidage en lacet du giravion. Un tel dispositif anti-couple est par exemple classiquement mais non exclusivement constitué d'un rotor arrière à axe sensiblement horizontal.
- ) par un ou plusieurs atterrisseurs formant des interfaces entre le giravion et le sol, tel qu'un atterrisseur à roues ou à patins. De tels atterrisseurs sont générateurs d'efforts généraux supportés par le fuselage lors de la prise de contact du giravion avec le sol.
- ) par le transport de charges lourdes classiquement considérées de masse supérieure à 300 kg et pouvant atteindre plusieurs tonnes. De telles charges lourdes, typiquement transportées par élingage, sont traditionnellement distinguées d'autres charges considérées comme légères. A titre indicatif, de telles charges légères sont par exemple relatives au transport de fret par treuillage et/ou en soute, relatives à divers équipements légers embarqués à bord de l'aéronef voire encore relatives au personnel transporté.
- ) par l'embarquement d'un équipement pesant du giravion, tels que des réservoirs à carburant et/ou un groupe de motorisation procurant la puissance mécanique nécessaire au fonctionnement du giravion et notamment à l'entraînement du ou des rotors.

Dans ces conditions, le ou les rotors principaux et le groupe de motorisation sont montés sur le fuselage par l'intermédiaire d'un plancher supérieur travaillant solidaire d'au moins deux cadres transversaux délimitant un tronçon médian du fuselage. Un tel tronçon médian est notamment interposé entre un poste de pilotage et la poutre de queue porteuse du dispositif anti-couple. On pourra par exemple se reporter à ce propos au document US2006/0243854 (SIKORSKY AIRCRAFT CORP) qui décrit des modalités de montage d'un rotor principal d'un giravion sur un tel plancher supérieur travaillant.

Les atterrisseurs sont classiquement montés sur des organes travaillants du fuselage notamment placés en prise avec au moins un cadre transversal. On pourra par exemple se reporter au document FR2895369 (EUROCOPTER FRANCE) qui décrit des modalités de montage d'un atterrisseur à patins sur un fuselage de giravion.

Pour ce qui est du transport de charges lourdes, un matériel d'élingage est couramment monté sur au moins un organe travaillant du fuselage, en veillant à ce que l'axe de portage des charges lourdes par une élingue soit sensiblement aligné avec l'axe du rotor principal pour éviter de déstabiliser le giravion. Le matériel d'élingage est potentiellement implanté sous le fuselage ou est porté par le plancher supérieur en s'étendant vers le sol, notamment après une traversée verticale du volume intérieur du fuselage. On pourra par exemple se reporter à ce propos au document FR2970944 (EUROCOPTER FRANCE) qui décrit un tel équipement d'élingage monté à bord d'un giravion.

Les réservoirs à carburant sont potentiellement logés en zone inférieure du fuselage communément désignée par barque, en reposant en fond de la barque sur la paroi inférieure, ou ventre, du fuselage. Le maintien en conformation du ventre du fuselage soumis aux efforts générés par la masse du carburant embarqué, est procuré par l'intermédiaire du revêtement et de raidisseurs longitudinaux du fuselage placés en prise avec des bords inférieurs des cadres. On pourra par exemple se reporter à ce propos aux documents FR2756255 (EUROCOPTER FRANCE) et EP2567896 (EUROCOPTER FRANCE), qui décrivent des modalités d'installation de réservoirs à carburant dans des compartiments ménagés en soubassement d'un fuselage de giravion.

Les réservoirs à carburant peuvent aussi être installés à l'intérieur d'un compartiment intérieur du fuselage solidaire du plancher supérieur et/ou d'au moins un cadre transversal du fuselage. On pourra par exemple se reporter à ce propos au document US5451015 (BELL HELICOPTER TEXTRON INC) qui décrit de telles modalités d'implantation d'un réservoir à carburant à bord d'un giravion, à l'arrière d'un poste de pilotage.

Des réservoirs à carburant auxiliaires ou principaux sont encore potentiellement installés latéralement sur le giravion, en étant portés par au moins un cadre transversal du fuselage et/ou par au moins une poutre du fuselage. On pourra par exemple se reporter à ce propos aux documents US4860972 (ERA AVIAT. INC) et US3966147 (GRUMMAN AEROSPACE CORP.).

Par ailleurs en ce qui concerne l'aménagement intérieur du fuselage, un espace habitable du giravion est traditionnellement réparti en un poste de pilotage avant et en au moins un local habitable médian interposé entre le poste de pilotage et la poutre de queue. Des cloisons verticales séparent longitudinalement et/ou transversalement l'espace habitable, lesdites cloisons étant soutenues directement ou indirectement par les cadres transversaux du fuselage. De telles cloisons verticales permettent de ménager divers locaux à l'intérieur du fuselage du giravion, tel qu'au moins un local habitable ou au moins un local technique.

Le fuselage est aussi traditionnellement divisé par un plancher technique horizontal séparant l'un de l'autre l'espace habitable et la barque. L'espace habitable est ménagé en surplomb de la barque, au moins le local habitable sinon aussi le poste de pilotage surplombant un ou plusieurs compartiments de la barque ménageant une soute ou logeant des réservoirs à carburant.

L'espace disponible offert par la barque est aussi potentiellement exploité pour abriter des câbles électriques, des conduits hydrauliques ou aérauliques, voire encore des tringleries de transmission de commandes de vol par exemple. De tels câbles électriques, conduits hydrauliques ou aérauliques et/ou tringleries s'étendant à bord de l'aéronef sont désignés ci-après par « organes étendus ». La barque est encore potentiellement exploitée pour ménager un local technique abritant des équipements du giravion et/ou une soute.

On pourra par exemple se reporter à propos de l'agencement intérieur d'un fuselage de giravion au document EP0581626 (EUROCOPTER France).

Concernant les planchers techniques séparant l'un de l'autre l'espace habitable et la barque, on pourra se reporter au document FR2974754 (DAHER AEROSPACE) qui décrit un exemple de réalisation d'un panneau composite exploité pour former un plancher technique d'aéronef.

On pourra aussi se reporter aux documents FR2939404 (AIRBUS France SA) et FR2939405 (AIBUS France SA) qui décrivent des modalités de montage de tels panneaux à bord d'un aéronef pour former un plancher technique. Les planchers techniques sont couramment fixés sur des organes porteurs, tels que des poutres, des traverses et/ou jambes de soutien, qui sont montés sur le fuselage. On pourra par exemple se reporter aux documents FR2933065 (AIBUS France SAS), FR2957050 (EADS France), FR2984273 (AEROLIA SAS) et FR2947524 (AIRBUS OPERATONS SAS) qui décrivent diverses modalités de montage d'un plancher technique à bord d'un aéronef.

Il est aussi à considérer dans l'agencement structurel du fuselage le fait que l'organisation intérieure du fuselage doit prendre en compte différentes missions de vol potentiellement allouées au giravion.

Par exemple, il doit être pris en considération une diversité de missions de vol relatives au transport de passagers dans l'espace habitable, en tenant compte de différents seuils de confort selon la qualité et/ou la fonction des passagers à bord. Par exemple encore, des missions de vol spécifiques sont relatives au transport de charges légères, tel que le transport de fret et/ou l'embarquement dans le local habitable d'équipements spécifiques.

Plus particulièrement, de telles charges légères transportées peuvent être embarquées à l'intérieur d'un compartiment du fuselage, tel qu'en soute ou dans un local habitable du giravion. Les charges légères peuvent encore être transportées et/ou être déplacées entre l'extérieur et l'intérieur du fuselage par treuillage. Le transport par treuillage de charges légères est classiquement effectué au moyen d'un treuil porté par un organe du fuselage auquel le treuil est fixé, directement ou indirectement.

Dans ce contexte les planchers techniques forment des plans de chargement pré-équipés selon des missions de vol données, leur aménagement étant organisé selon diverses configurations propres à des missions de vol spécifiques du giravion. En effet, les planchers techniques sont par exemple pré-équipés de divers organes de fixation pour l'ancrage de sièges et/ou de fret notamment, voire encore pour l'ancrage de divers cordages.

Il en ressort que pour une mission de vol donnée d'un giravion, le plancher technique dont il est pourvu est pré-équipé par exemple pour le transport de passagers en nombre prédéfinis pouvant être variable, avec des conditions de confort et d'équipement spécifiques selon la qualité et/ou la fonction à bord des passagers. Le plancher technique peut être aussi aménagé spécifiquement pour le transport de fret. On pourra par exemple se reporter à ce propos aux documents US5517895 (SANDERSON, P.H.), FR2953485 (AIRBUS OPERATIONS SAS) et FR2947527 (AIRBUS OPERATIONS).

En outre, les planchers techniques comportent couramment des goulottes de passage de câbles électriques pour l'alimentation en énergie électrique des équipements embarqués dans l'habitacle à demeure ou spécifiquement pour une mission de vol donnée, voire encore pour procurer des points spécifiques d'alimentation en énergie électrique potentiellement utilisables par les passagers selon leur qualité et/ou leur fonction à bord de l'aéronef.

La diversité des missions de vol rend délicate l'utilisation d'un même plancher technique pour l'ensemble des missions de vol potentielles du giravion. Divers planchers techniques spécifiquement pré-équipés pour des missions de vol respectives sont alors alternativement utilisés. On pourra par exemple se reporter à ce propos au document FR2960514 (AIRBUS OPERATIONS).

Par ailleurs, la position du plancher technique en surplomb de la barque formant local technique implique un aménagement spécifique du plancher technique pour permettre à un opérateur d'accéder au volume intérieur de la barque. A cet effet, des trappes d'accès à la barque sont diversement agencées et réparties sur les planchers techniques. Cependant l'accès à la barque est délicat, tel que mentionné par les documents US5371935 (UNITED TECH. CORP) et US3966147 (GRUMMAN AEROSPACE CORP.) qui proposent de surmonter de telles difficultés d'accès à des réservoirs de carburant logés dans des compartiments spécifiques du fuselage.

En conséquence, il apparaît que l'agencement global du fuselage doit prendre en compte une interchangeabilité rapide et aisée entre divers planchers techniques. Notamment, il est utile que l'agencement du fuselage facilite le remplacement rapide et aisé entre divers planchers techniques spécifiquement pré-équipés et la faculté offerte d'accéder au volume intérieur de la barque logeant potentiellement des réservoirs à carburant, voire tout autre matériel porté par le ventre du giravion.

Par ailleurs, il doit être pris en compte une situation de crash du giravion dans la conception de la structure du fuselage et dans son aménagement intérieur. Plus particulièrement, la résistance du fuselage ainsi que la répartition et les modalités d'implantation des divers équipements du giravion sur le fuselage doivent prendre en compte une sécurisation optimisée des personnes en cas de crash du giravion.

Dans le contexte d'un fuselage d'aéronef, les notions de « travaillant » et de « non travaillant » sont des notions de qualification d'organes courantes pour l'homme du métier, de telles notions qualifiant des organes du fuselage travaillant ou non vis-à-vis des efforts généraux supportés par le fuselage.

Il est aussi bien évidemment compris que les notions de « vertical », de « horizontal », de « longitudinal », de « transversal », « avant », « arrière », « inférieur », « supérieur » et de « surplomb », sont des notions relatives qui sont à apprécier vis-à-vis de la station du giravion au sol et de l'extension longitudinale du fuselage entre l'avant et l'arrière du giravion. De telles notions sont communément identifiées par l'homme du métier.

Pour connaître un environnement technologique éloigné de la présente invention relevant des structures de fuselage d'un giravion, on pourra aussi se reporter aux documents FR1530625 (BOEING CO), DE102006019220 (HOCHSCHULE FUER ANGEWANDTE), US 2009146010 (COHEN NEHEMIA IL), DE19924480 (UTI HOLDING §MAN AG), ainsi qu'au document XP002726743 « Boeing Vertol Chinook HC Mk1 », Pilot Presse (2012-12-01) extrait du réseau de communication internet en date du 07/07/2014 à l'adresse URL suivante : http://sobchak.files.wordpress.com/2009/08/ch47cut.gif .

Dans ce contexte, il apparaît que la structuration du fuselage d'un giravion implique une recherche permanente pour l'homme du métier confronté à une multitude de problèmes à résoudre et de difficultés à surmonter.

Des solutions doivent être trouvées pour parvenir à un compromis satisfaisant entre les différents inconvénients et avantages liés à ces solutions, souvent selon des choix effectués par les concepteurs selon leur propre perception des problèmes à résoudre et des difficultés à surmonter.

Le but de la présente invention est de proposer dans ce contexte de recherche permanente une structure de fuselage d'un giravion, offrant des solutions avantageuses procurant un compromis satisfaisant vis-à-vis des problèmes et des difficultés à surmonter précédemment énoncés.

La structure de fuselage d'un giravion de la présente invention est étendue longitudinalement entre l'avant et l'arrière du giravion, en étant formée d'organes raidisseurs travaillants et d'un revêtement travaillant, les organes raidisseurs travaillant et le revêtement travaillant reprenant les efforts généraux supportés par le fuselage.

Les organes raidisseurs travaillants comprennent notamment des cadres transversaux travaillants délimitant localement le profil transversal du fuselage en étant reliés entre eux par le revêtement travaillant raidi par des raidisseurs longitudinaux travaillants. Le fuselage comprend notamment un tronçon médian longitudinalement interposé entre un poste de pilotage et une poutre de queue porteuse d'un dispositif anti-couple. Un plancher supérieur travaillant est monté en prise solidaire avec au moins deux dits cadres, dits cadres médians. De tels cadres médians sont intégrés au tronçon médian du fuselage. Le plancher supérieur ménage une paroi supérieure du fuselage en constituant un organe d'implantation sur le fuselage au moins d'un rotor principal à axe sensiblement vertical du giravion, voire encore d'un groupe de motorisation fournissant la puissance mécanique nécessaire à l'entraînement d'au moins un rotor équipant le giravion.

Le fuselage est équipé de structures de cloisonnement délimitant divers compartiments dans le volume intérieur du fuselage. Parmi ces compartiments, au moins un compartiment supérieur à fonction de local habitable et au moins un compartiment inférieur à fonction de local technique sont séparés l'un de l'autre par une telle structure de cloisonnement formée par un plancher médian disposé en zone verticalement médiane du fuselage en étant au moins en partie surplombé par le plancher supérieur. Le plancher médian ménage à sa face supérieure un plan de chargement autorisant notamment au moins la circulation des personnes et l'installation de fret et/ou d'équipements du giravion dans le compartiment supérieur.

Selon la présente invention, ledit plancher médian est en prise solidaire au moins avec lesdits cadres médians en formant un plancher travaillant. Le compartiment inférieur est exempt dudit revêtement à la face inférieure du fuselage qui est ouverte vers l'extérieur en ménageant un débouché du compartiment inférieur vers l'extérieur du fuselage.

Il en ressort qu'à l'encontre des traditions dans le domaine des giravions, il est fait le choix de subdiviser en deux compartiments le volume intérieur du fuselage au moins dans son tronçon médian par un plancher travaillant placé en zone verticalement médiane du fuselage. Le volume intérieur du fuselage est verticalement subdivisé en deux compartiments comportant chacun une paroi horizontale travaillante vis-à-vis des efforts généraux globalement subis par le fuselage. Une telle paroi horizontale travaillante peut être mise à profit pour surmonter les difficultés propres aux aménagements respectifs du compartiment supérieur et du compartiment inférieur indépendamment l'un de l'autre.

Par exemple, le plancher médian est apte à former un plan de fixation d'éléments modulaires tels qu'agencés en dalles pré-équipées pour la réception d'équipements spécifiques selon les missions de vol du giravion. De telles dalles peuvent composer un faux plancher technique facilement interchangeable par remplacement sélectif des dalles. En outre, un tel faux plancher technique peut être facilement rehaussé par rapport à la face supérieure du plancher médian pour ménager des passages pour de dits éléments étendus.

Par exemple encore, le plancher médian est apte à autoriser une extension verticale du compartiment inférieur pouvant être conséquente selon les missions de vol du giravion, en bénéficiant de la faculté d'accéder depuis l'extérieur du giravion au compartiment inférieur à travers son débouché ménagé à la face inférieure du fuselage exempt de revêtement au moins dans son tronçon médian.

L'accès au compartiment inférieur depuis la face inférieure du fuselage à travers ledit débouché du compartiment inférieur peut être mis à profit pour faciliter l'implantation et l'entretien de réservoirs à carburant logés dans le compartiment inférieur en étant ancrés par suspension à la face inférieure du plancher médian.

En outre, le débouché du compartiment inférieur facilite d'éventuelles implantations et exploitations de matériels lourds, tel qu'un matériel d'élingage installé à bord du giravion notamment par ancrage en suspension dudit matériel lourd à la face inférieure du plancher médian.

De plus, l'embarquement par treuillage et le stockage de fret à l'intérieur du compartiment inférieur peuvent être avantageusement facilités au moyen d'un treuil ancré par suspension à la face inférieure du plancher médian. Une nacelle manoeuvrable par ledit treuil logé dans le compartiment inférieur peut être utilisée pour l'embarquement de fret dans le compartiment inférieur. La nacelle peut être avantageusement exploitée pour fermer le débouché du compartiment inférieur en phase de vol du giravion.

Par ailleurs en cas de crash du giravion, le plancher médian forme un bouclier apte à accroître la protection des personnes et des biens transportés dans le compartiment supérieur, voire encore dans le poste de pilotage. En effet, le plancher médian forme un obstacle robuste fortement résistant à l'encontre d'une intrusion d'éléments extérieurs dans le compartiment supérieur, tel que le matériel logé dans le compartiment inférieur et/ou un atterrisseur.

Un tel atterrisseur peut être monté sur le giravion en exploitant une structure de montage en prise avec le plancher médian, directement ou indirectement par l'intermédiaire d'organes travaillants du fuselage.

Le plancher médian ménage par l'intermédiaire de sa face inférieure un organe d'ancrage par suspension d'un matériel à suspendre accessible depuis l'extérieur du fuselage à travers ledit débouché. Le plancher médian est notamment muni à sa face inférieure formant plafond travaillant du compartiment inférieur de moyens de soutien en suspension d'un dit matériel au moins parmi l'un quelconque au moins des matériels à suspendre suivants :
- ) au moins un réservoir à carburant,
- ) un matériel d'élingage dédié au transport de charges lourdes,
- ) un matériel de treuillage dédié à l'embarquement dans le compartiment inférieur de charges légères.

De tels moyens de soutien en suspension d'un matériel à suspendre sont potentiellement intégrés à demeure au plancher médian, en étant sélectivement utilisés selon les besoins et notamment selon le ou les matériels à suspendre installés par suspension à l'intérieur du compartiment inférieur.

Selon une forme de réalisation, le compartiment inférieur est délimité entre le plancher médian et une jupe latérale ménagée en soubassement du fuselage en prolongement du revêtement. Ladite jupe délimite avantageusement ledit débouché en bordure de bords libres de la jupe ménagés à sa face inférieure ouverte sur l'extérieur du fuselage.

La jupe est de préférence munie d'organes de renfort de son maintien en conformation, notamment à l'encontre de son fléchissement transversal.

Lesdits organes de renfort peuvent s'étendre indifféremment suivant l'extension longitudinale et/ou suivant l'extension transversale de la jupe. Lesdits organes de renfort sont par exemple agencés en caissons préférentiellement ménagés à la base de la jupe en bordure dudit débouché.

Par ailleurs, la face supérieure du plancher médian forme notamment un plan de fixation d'un faux-plancher technique. Un tel faux-plancher technique est avantageusement composé de dalles interchangeables parmi un jeu de dalles respectivement pré-équipées d'organes de fixation spécifiques d'équipements du giravion. Le compartiment supérieur est apte à être aménagé selon diverses missions de vol du giravion par remplacement sélectif des dalles.

Lesdits organes de fixation sont par exemple classiquement formés de rails ou de glissières d'implantation de sièges, d'organes d'attaches pour l'embarquement de fret, d'organes de fixation d'un cordage pour la suspension de personnels (communément désigné par « hélicordage »), d'organe d'implantation d'une console d'équipement informatique ou encore de prises de raccordement à une source d'alimentation en énergie électrique notamment fournie par le réseau électrique de bord du giravion.

Le compartiment supérieur est apte à être aménagé en équipements spécifiques selon diverses missions de vol affectées au giravion par remplacement aisé sélectivement des dalles selon leur localisation sur le plan de fixation, parmi le jeu de dalles spécifiquement pré-équipées pour la réception d'un ou de plusieurs équipements utiles à une ou plusieurs missions de vol données.

Plus particulièrement, lesdites dalles sont notamment individuellement pré-équipées d'organes de fixation d'équipements du giravion, au moins parmi l'un quelconque au moins des équipements suivants :
- ) au moins un siège,
- ) au moins un organe d'attache de fret,
- ) au moins un cordage de soutien en suspension d'un personnel,
- ) au moins une console comportant au moins un instrument de calcul et au moins un écran d'affichage d'informations,
- ) au moins une prise de raccordement au réseau électrique de bord du giravion,
- ) au moins une prise de raccordement à un réseau de communication d'informations du giravion.

Selon une forme avantageuse de réalisation, un passage d'éléments étendus est ménagé entre la face supérieure du plancher médian et le faux plancher technique. Un tel passage préserve le compartiment supérieur d'un encombrement au sol de goulottes traditionnelles de protection de tels éléments étendus s'étendant en surface du plan de chargement et induisant une gêne pour la circulation des personnes dans le compartiment supérieur et/ou pour l'embarquement de fret à l'intérieur du compartiment supérieur.

Tel que précédemment visé, de tels éléments étendus sont potentiellement, isolément ou en combinaison :
- ) des câbles d'alimentation en énergie électrique et/ou des câbles de transmission d'informations,
- ) des conduits aérauliques, tels que des conduits aérauliques en communication avec une installation de ventilation, de chauffage et/ou de climatisation permettant de ventiler localement le compartiment supérieur selon son agencement,
- ) des conduits hydrauliques, tels que par exemple des conduits hydrauliques d'acheminement de carburant depuis au moins un réservoir à carburant logé dans le compartiment inférieur vers le groupe de motorisation implanté sur le plancher supérieur,

- ) au moins une tringlerie de transmission de commandes de vol,
- ) des conduits hydrauliques de transmission de fluide sous pression pour la manoeuvre en puissance d'un organe du giravion, tel que par exemple les pales de la voilure tournante d'un quelconque rotor équipant le giravion.

Ledit débouché est de préférence muni d'une paroi d'obturation amovible autorisant par son retrait un accès au compartiment inférieur en station au sol du giravion et procurant par son installation sur le fuselage la clôture du compartiment inférieur en phase de vol du giravion.

Ladite paroi d'obturation peut être avantageusement formée d'une nacelle que comprend un matériel de treuillage porté par suspension à la face inférieure du plancher médian.

Le plancher médian est par exemple formé de panneaux travaillants portés par des traverses travaillantes en prise solidaire avec au moins les cadres médians par l'intermédiaire de longerons travaillants reliant les traverses entre elles.

Selon une forme de réalisation, lesdits panneaux sont des panneaux stratifiés agencés en panneaux alvéolés renforcés par au moins une strate de renfort en matériaux composites intégrant des fibres multidirectionnelles noyées dans une matrice résineuse. Selon une variante, les panneaux stratifiés sont agencés en panneaux alvéolés renforcés par des plaques métalliques, telles que des plaques d'aluminium par exemple.

Les panneaux sont potentiellement fixés par rivetage sur lesdites traverses et/ou sur lesdits longerons en étant de préférence encastrés à leurs bords dans des goulottes ménagées au moins par les dites traverses sinon aussi par lesdits longerons, pour renforcer la résistance globale du plancher médian vis-à-vis des efforts généraux supportés par le fuselage.

Le plancher médian constitue avantageusement un bouclier de protection vis-à-vis d'une intrusion dans le compartiment supérieur d'éléments extérieurs audit compartiment supérieur. De tels éléments extérieurs sont par exemple des éléments extérieurs au giravion ou des éléments normalement logés dans le compartiment inférieur ou encore un atterrisseur.

La présente invention a aussi pour objet un giravion comportant une structure de fuselage telle qu'elle vient d'être décrite.

Un exemple de réalisation de la présente invention va être décrit en relation avec les figures de la planche annexée, dans laquelle :
- les fig.1 et fig.2 sont des illustrations schématiques d'un giravion comportant une structure de fuselage selon un exemple de réalisation de la présente invention, respectivement représenté en perspective et en vue longitudinale,
- la fig.3 est une illustration schématique en vue transversale médiane d'un fuselage de giravion, tel que par exemple le fuselage du giravion représenté sur les fig.1 et fig.2.

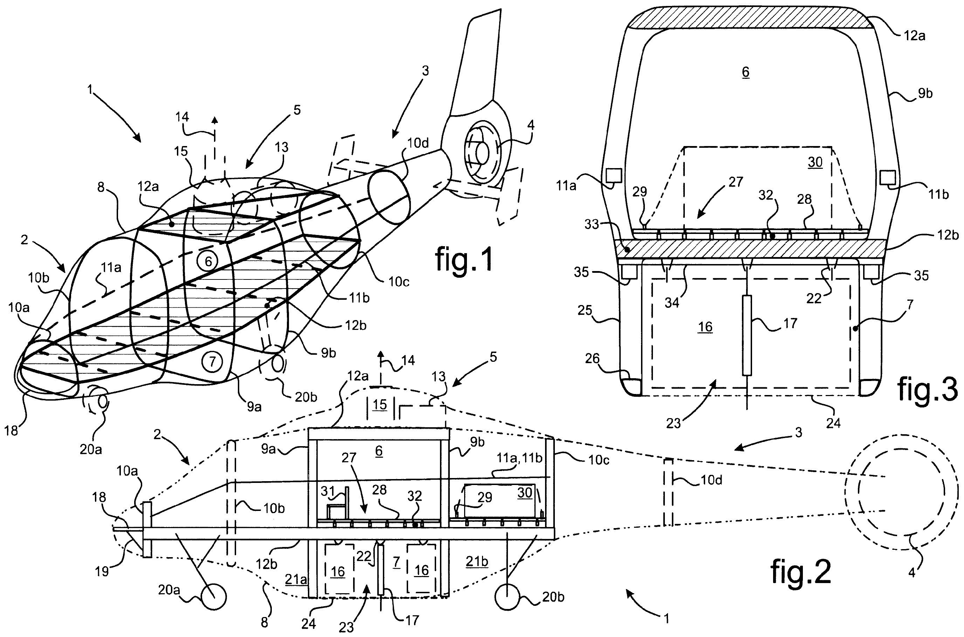

Sur les fig.1 et fig.2, un giravion 1 comprend longitudinalement un poste de pilotage 2 situé à l'avant et une poutre de queue 3 supportant un dispositif anti-couple 4, tel qu'un rotor arrière par exemple. Le poste de pilotage 2 et la poutre de queue 3 sont longitudinalement séparés l'un de l'autre par un tronçon médian 5 du fuselage du giravion 1.

Le tronçon médian 5 est cloisonné par un plancher médian ménageant un compartiment supérieur 6 formant un local habitable et un compartiment inférieur 7 formant un local technique.

Le fuselage du giravion 1 s'étend longitudinalement entre l'avant et l'arrière du giravion et comprend des organes de raidissement d'un revêtement 8. Les organes de raidissement comprennent classiquement des raidisseurs longitudinaux tels que 11a et 11b et des cadres transversaux 9a,9b et 10a, 10b, 10c, 10d disposés longitudinalement à distance les uns des autres en délimitant localement le profil transversal du fuselage du giravion 1. Le revêtement 8, les cadres 9a,9b et 10a, 10b, 10c, 10d et les raidisseurs longitudinaux 11a et 11b sont des organes travaillants de la structure du fuselage.

Le fuselage comprend aussi un plancher supérieur 12a travaillant en prise solidaire avec au moins deux cadres médians 9a,9b dudit tronçon médian 5. Le plancher supérieur 12a forme une paroi supérieure du fuselage et constitue un organe du fuselage porteur d'un groupe de motorisation 13 et d'un rotor principal 14 à axe sensiblement vertical du giravion 1 par l'intermédiaire d'une boîte 15 de transmission de puissance principale.

Le plancher médian est constitué d'un plancher médian 12b travaillant intégré à la structure du fuselage en étant au moins en partie surplombé par le plancher supérieur 12a. Le plancher médian 12b est en prise solidaire avec au moins deux cadres du tronçon médian 5, et plus particulièrement avec les deux dits cadres médians 9a,9b avec lesquels le plancher supérieur 12a est en prise solidaire.

Il en ressort que le fuselage comporte un ensemble travaillant comprenant divers organes du fuselage travaillant vis-à-vis des efforts généraux supportés par le fuselage, dont :
- ) des organes raidisseurs travaillants du fuselage comprenant les cadres 9a,9b ;10a,10b,10c,10d et les raidisseurs longitudinaux 11a, 11b du revêtement 8,
- ) le revêtement 8 travaillant au moins localement, notamment en transmettant lesdits efforts généraux aux cadres 9a,9b et 10a, 10b, 10c, 10d,
- ) le plancher supérieur 12a porteur notamment au moins du rotor principal 14 sinon aussi d'un groupe de motorisation 13 fournissant la puissance mécanique nécessaire au giravion 1, et
- ) le plancher médian 12b en prise solidaire avec les cadres 9a,9b ; 10a, 10b, 10c, 10d, notamment pour leur transmettre lesdits efforts généraux supportés par le fuselage et notamment générés par des charges portées en suspension par le plancher médian 12b.

Le plancher médian 12b s'étend au moins le long du tronçon médian 5, voire encore tel qu'illustré vers l'avant du giravion 1 en direction du poste de pilotage 2 et/ou vers l'arrière du giravion 1 en direction de la poutre de queue 3. Le plancher médian 12b forme une structure de cloisonnement verticalement médian du fuselage pour séparer l'un de l'autre le compartiment supérieur 6 et le compartiment inférieur 7, principalement dans la zone du tronçon médian 5 et subsidiairement au besoin au moins en partie dans le poste de pilotage 2.

Dans le poste de pilotage 2, un plancher technique de nez 18 est potentiellement ménagé en prolongement du plancher médian 12b. Un tel plancher technique de nez 18 est non travaillant vis-à-vis des efforts généraux supportés par le fuselage, tel qu'habituellement dans le domaine des giravions. Le plancher technique de nez 18 peut être aisément porté par le plancher médian 12b et/ou par l'intermédiaire d'au moins un cadre, tel que le cadre 10a, notamment au moyen d'organes intermédiaires non travaillants tels que par exemple des organes intermédiaires agencés en béquilles 19 comme illustré sur la fig.2.

Le plancher médian 12b peut aussi être exploité pour l'ancrage à sa face inférieure d'au moins un atterrisseur, tel qu'un atterrisseur avant 20a et/ou un atterrisseur arrière 20b illustrés pour exemple sur les fig.1 et fig.2. De tels atterrisseurs 20a,20b sont potentiellement manoeuvrables entre une position déployée et une position escamotée, et peuvent être avantageusement logés en phase de vol du giravion 1 dans des chambres 21a,21b du compartiment inférieur 7 tel qu'illustré sur la fig.2. En cas de crash du giravion 1, une protection accrue du poste de pilotage 2 et/ou du compartiment supérieur 6 est procurée par le plancher médian 12b vis-à-vis d'une intrusion des trains d'atterrissage 20a,20b.

Sur les fig.1 à fig.3, le compartiment inférieur 7 est potentiellement d'un volume conséquent et peut être ouvert à la face inférieure du fuselage exempte de revêtement 8 pour ménager un débouché du compartiment inférieur 7 vers l'extérieur du fuselage. Un matériel à suspendre potentiellement pesant peut être porté par suspension par le plancher médian 12b, en étant aisément accessible par un opérateur depuis l'extérieur du giravion 1 dont le ventre est dégagé du revêtement 8.

Sur les fig.2 et fig.3, ledit matériel à suspendre est par exemple constitué d'au moins un réservoir à carburant 16 ou d'un matériel d'élingage 17 dédié au transport de charges lourdes, voire encore d'un matériel de treuillage non représenté dédié au transport de charges légères embarquées dans le compartiment inférieur 7.

La face inférieure du plancher médian 12b est équipée de moyens de soutien en suspension 22 d'au moins un dit matériel à suspendre. De tels moyens de soutien en suspension 22 sont par exemple agencés en au moins un organe d'accrochage coopérant avec un organe d'attache dont est muni le matériel à suspendre, tel que par exemple des sangles équipant le ou les réservoirs à carburant 16 et/ou un crochet pour le matériel d'élingage 17 ou le matériel de treuillage.

Ledit débouché 23 procure un accès aisé au compartiment inférieur 7. Une telle aisance d'accès au compartiment inférieur 7 permet de faciliter l'installation et la maintenance du matériel à suspendre, ou permet d'autoriser le passage vers l'extérieur du giravion d'une élingue du matériel d'élingage 17.

Le débouché 23 peut être optionnellement obturé par une paroi d'obturation 24 amovible clôturant le compartiment inférieur 7 lorsque cela est utile, notamment en phase de vol du giravion. Une telle paroi d'obturation 24 est par exemple agencée en capot fixé sur le fuselage en bordure du débouché 23 par des moyens de jonction facilement réversible, tel que par des vis ou des attaches. La paroi d'obturation 24 peut être facilement retirée pour le transport de charges lourdes par le matériel élingage 17 ou pour l'installation et/ou la maintenance du matériel à suspendre, tels que lesdits réservoirs à carburant 16. On relèvera qu'une nacelle que comprend un matériel de treuillage, non représenté, embarqué par suspension au plancher médian 12b peut être exploitée pour former ladite paroi d'obturation 24.

En cas de crash du giravion, le plancher médian 12b ménage avantageusement un bouclier de protection des personnes et des biens installés au moins à l'intérieur du compartiment supérieur 6, voire aussi dans le poste de pilotage 2, vis-à-vis du matériel à suspendre 16,17 logé dans le compartiment inférieur 7.

Par ailleurs et toujours sur les fig.2 et fig.3, le plancher médian 12b ménage un plan de chargement à l'intérieur du compartiment supérieur 6. Un tel plan de chargement est classiquement exploité pour le transport de passagers et/ou pour le transport de fret 30 à l'intérieur du compartiment supérieur 6.

Le débouché 23 autorisant un accès au compartiment inférieur 7 depuis l'extérieur du fuselage, la face supérieure du plancher médian 12b est libérée de toute contrainte d'accès au compartiment inférieur 7 et peut être librement organisée selon les missions de vol du giravion. A cet effet, la face supérieure du plancher médian 12b est apte à former un plan de fixation d'un faux-plancher technique 27 composé de dalles 28 modulaires pré-équipées individuellement et interchangeables selon les besoins.

De telles dalles 28 pré-équipées sont sélectivement munies d'organes de fixation, tels que par exemple des organes de fixation 29 d'un matériel d'attache de fret 30 tel qu'illustré. Il est bien évident que les dalles 28 sont pré-équipées d'organes de fixation 29 spécifiques selon le matériel à installer à l'intérieur du compartiment supérieur 6.

De tels organes de fixation, connus du domaine des giravions, sont par exemple des organes de fixation de sièges, tel que le siège 31 illustré sur la fig.2, ou des organes de fixation d'instruments ou d'équipements, voire encore des organes de fixation de prises de raccordement électrique de tels instruments ou équipements entre eux ou de prises d'alimentation en énergie électrique depuis le réseau de bord pouvant être exploitées par un passagers pour son équipement personnel.

La modularité du faux-plancher technique 27 est mise à profit pour faciliter l'adaptation du giravion selon les missions de vol qui lui sont affectées, tel que pour le transport de fret, d'équipements spécifiques et/ou de passagers. En ce qui concerne les passagers, la modularité du faux-plancher technique 27 peut être mise à profit pour adapter les conditions d'accueil et de confort procurées par le giravion, en fonction du nombre, de la qualité et/ou de la fonction à bord des passagers.

L'exploitation d'un faux plancher technique 27 fixé sur la face supérieure du plancher médian 12b permet de ménager aisément au moins un passage 32 d'éléments étendus entre les différents tronçons du fuselage. Un tel passage 32 peut être aisément ménagé en rehaussant le faux plancher technique. La présence de tels passages facilite l'aménagement selon les besoins du compartiment supérieur 6, voire encore du poste de pilotage 2.

Sur la fig.3, le compartiment inférieur 7 est délimité entre le plancher médian 12b et une jupe 25 latérale du fuselage ménagée en prolongement de la paroi du fuselage délimitant le compartiment supérieur 6, voire aussi le poste de pilotage 2. Les bords libres de la jupe 25 délimitent à sa face inférieure le débouché 23 sur l'extérieur du compartiment inférieur 7. La jupe 25 est de préférence munie d'organes de renfort 26 favorisant son maintien en conformation, notamment à l'encontre d'un fléchissement transversal. De tels organes de renfort 26 sont par exemple agencés en caissons longitudinaux ménagés à la base de la jupe 25.

Le plancher médian 12b est par exemple formé de panneaux 33 portés par des organes raidisseurs 34,35 du fuselage. De tels organes raidisseurs comprennent notamment des traverses 34 travaillantes en prise solidaire avec au moins les cadres médians 9a,9b par l'intermédiaire de longerons 35 travaillants reliant les traverses 34 entre elles.

## Revendications

1. Structure de fuselage d'un giravion (1) apte à être étendue longitudinalement entre l'avant et l'arrière du giravion (1) et formée d'organes raidisseurs travaillants et d'un revêtement (8) travaillant; les organes raidisseurs comprenant des cadres (9a, 9b, 10a, 10b, 10c, 10d) transversaux travaillants délimitant localement le profil transversal de la structure de fuselage et des raidisseurs longitudinaux (11a, 11b) travaillants; la structure de fuselage comprenant un tronçon médian (5) apte à être longitudinalement interposé entre un poste de pilotage (2) et une poutre de queue (3) porteuse d'un dispositif anti-couple (4); la structure de fuselage comportant un plancher médian (12b) et un plancher supérieur (12a) travaillant monté en prise solidaire avec au moins deux dits cadres transversaux travaillants, dits cadres médians (9a, 9b) intégrés au tronçon médian (5); le plancher supérieur (12a) ménageant une paroi supérieure apte à constituer un organe d'implantation d'au moins d'un rotor principal (14) à axe sensiblement vertical du giravion; la structure de fuselage étant équipée de structures de cloisonnement délimitant divers compartiments dans un volume intérieur de la structure de fuselage, dont au moins : un compartiment supérieur (6) à fonction de local habitable et au moins un compartiment inférieur (7) à fonction de local technique, le compartiment supérieur (6) et le compartiment inférieur (7) étant séparés l'un de l'autre par le plancher médian (12b) disposé entre le compartiment supérieur (6) et le compartiment inférieur (7) verticalement ; ce plancher médian (12b) étant au moins en partie surplombé par le plancher supérieur (12a) et ménageant à sa face supérieure un plan de chargement dans le compartiment supérieur (6), ledit plancher médian (12b) étant en prise solidaire au moins avec lesdits cadres médians (9a, 9b), **caractérisé en ce que** le plancher médian (12b) forme un plancher travaillant et est formé de panneaux renforcés (33) ainsi que d'organes raidisseurs (34, 35) ; les panneaux renforcés (33) étant fixés sur et / ou encastrés dans les organes raidisseurs (34, 35) ; longitudinalement entre les cadres médians (9a, 9b), le compartiment inférieur (7) étant exempt dudit revêtement (8) à une face inférieure du fuselage qui est ouverte vers l'extérieur en ménageant un débouché (23) du compartiment inférieur (7) vers l'extérieur du fuselage.

2. Structure de fuselage d'un giravion selon la revendication 1,
**caractérisée en ce que** par l'intermédiaire d'une face inférieure du plancher médian (12b), le plancher médian (12b) ménage un organe d'ancrage par suspension d'un matériel à suspendre (16,17) accessible depuis l'extérieur du fuselage à travers ledit débouché (23).

3. Structure de fuselage d'un giravion selon la revendication 2,
**caractérisée en ce que** le plancher médian (12b) est muni à sa face inférieure, formant plafond du compartiment inférieur (7), de moyens de soutien en suspension (22) d'un dit matériel à suspendre (16,17) au moins parmi l'un quelconque au moins des matériels suivants :
- ) au moins un réservoir à carburant (16),
- ) un matériel d'élingage (17) dédié au transport de charges lourdes,
- ) un matériel de treuillage dédié à l'embarquement dans le compartiment inférieur (7) de charges légères.

4. Structure de fuselage d'un giravion selon l'une quelconque des revendications 1 à 3,
**caractérisée en ce que** le compartiment inférieur (7) est délimité entre le plancher médian (12b) et une jupe (25) latérale ménagée en soubassement du fuselage en prolongement du revêtement (8), ladite jupe (25) délimitant ledit débouché (23) en bordure de bords libres de la jupe (8) ménagés à sa face inférieure ouverte sur l'extérieur du fuselage.

5. Structure de fuselage d'un giravion selon l'une quelconque des revendications 1 à 4,
**caractérisée en ce que** la face supérieure du plancher médian (12b) forme un plan de fixation d'un faux-plancher technique (27) composé de dalles (28) interchangeables parmi un jeu de dalles (28) respectivement pré-équipées d'organes de fixation (29) spécifiques d'équipements du giravion (1), le compartiment supérieur (6) étant apte à être aménagé selon diverses missions de vol du giravion (1) par remplacement sélectif des dalles (28).

6. Structure de fuselage d'un giravion selon la revendication 5,
**caractérisée en ce que** lesdites dalles (28) sont individuellement pré-équipées de dits organes de fixation (29) d'équipements du giravion (1) au moins parmi l'un quelconque au moins des équipements suivants :
- ) au moins un siège (31),
- ) au moins un organe d'attache de fret (30),
- ) au moins un cordage de soutien en suspension d'un personnel,
- ) au moins une console comportant au moins un instrument de calcul et au moins un écran d'affichage d'informations,
- ) au moins une prise de raccordement au réseau électrique de bord du giravion (1),
- ) au moins une prise de raccordement à un réseau de communication d'informations du giravion (1),

7. Structure de fuselage d'un giravion selon l'une quelconque des revendications 5 et 6,
**caractérisée en ce qu'**un passage (32) d'éléments étendus est ménagé entre la face supérieure du plancher médian (12b) et le faux plancher technique (27).

8. Structure de fuselage d'un giravion selon l'une quelconque des revendications 1 à 7,
**caractérisée en ce que** ledit débouché (23) est muni d'une paroi d'obturation (24) amovible autorisant par son retrait un accès au compartiment inférieur (12b) en station au sol du giravion (1) et procurant par son installation sur le fuselage la clôture du compartiment inférieur (7) en phase de vol du giravion.

9. Structure de fuselage d'un giravion selon la revendication 8,
**caractérisée en ce que** ladite paroi d'obturation (24) est formée d'une nacelle que comprend un matériel de treuillage porté par suspension à la face inférieure du plancher médian (12b).

10. Structure de fuselage d'un giravion selon l'une quelconque des revendications 1 à 9,
**caractérisée en ce que** le plancher médian (12b) est formé de panneaux (33) travaillants portés par des organes raidisseurs en forme de traverses (34) travaillantes en prise solidaire avec au moins les cadres médians (9a,9b) par l'intermédiaire de longerons (35) travaillants reliant les traverses (34) entre elles.

11. Structure de fuselage d'un giravion selon la revendication 10,
**caractérisée en ce que** lesdits panneaux (33) sont des panneaux stratifiés agencés en panneaux alvéolés renforcés.

12. Structure de fuselage d'un giravion selon l'une quelconque des revendications 10 et 11,
**caractérisée en ce que** lesdits panneaux (33) sont encastrés à leurs bords dans des goulottes ménagées au moins par les dites traverses (34) sinon aussi par lesdits longerons (35).

13. Structure de fuselage d'un giravion selon les revendications 1 à 12,
**caractérisée en ce que** le plancher médian (12b) constitue un bouclier de protection vis-à-vis d'une intrusion dans le compartiment supérieur (6) d'éléments extérieurs audit compartiment supérieur (6).

14. Giravion (1) comportant une structure de fuselage selon l'une quelconque des revendications 1 à 13.

## Patentansprüche

1. Rumpfstruktur eines Hubschraubers (1), welche sich in Längsrichtung zwischen dem Vorderteil und dem Hinterteil des Hubschraubers (1) erstrecken kann und aus arbeitenden Versteifungselementen und einer arbeitenden Verkleidung (8) gebildet wird, wobei die Versteifungselemente arbeitende Querrahmen (9a, 9b, 10a, 10b, 10c, 10d), die lokal das Querprofil der Rumpfstruktur eingrenzen, und arbeitende Längsversteifungen (11a, 11b) aufweisen, wobei die Rumpfstruktur einen Mittelabschnitt (5) aufweist, der in Längsrichtung zwischen einer Flugkanzel (2) und einem Heckausleger (3), der eine Drehmomentausgleichsvorrichtung (4) trägt, angeordnet sein kann, wobei die Rumpfstruktur einen mittleren Boden (12b) und einen arbeitenden oberen Boden (12a) aufweist, der mit mindestens zwei arbeitenden Querrahmen fest verbunden ist, die mittlere, in den Mittelabschnitt (5) integrierte Rahmen (9a, 9b) genannt werden, wobei der obere Boden (12a) eine obere Wand bildet, die ein Einbauelement mindestens eines Hauptrotors (14) des Hubschraubers mit im Wesentlichen vertikaler Achse bilden kann, wobei die Rumpfstruktur mit Trennwandstrukturen versehen ist, die verschiedene Abteile in einem Innenvolumen der Rumpfstruktur eingrenzen, von denen mindestens eines: ein oberes Abteil (6) ist mit der Funktion eines Passagierraums, und mindestens eines ein unteres Abteil (7) ist mit der Funktion eines Technikraums, wobei das obere Abteil (6) und das untere Abteil (7) voneinander durch den mittleren Boden (12b) getrennt sind, der zwischen dem oberen Abteil (6) und dem unteren Abteil (7) vertikal angeordnet ist, wobei der mittlere Boden (12b) mindestens teilweise von dem oberen Boden (12a) überragt wird und an seiner oberen Fläche eine Ladeebene in das obere Abteil (6) ausbildet, wobei der mittlere Boden (12b) mindestens mit den mittleren Rahmen (9a, 9b) fest verbunden ist, **dadurch gekennzeichnet, dass** der mittlere Boden (12b) einen arbeitenden Boden bildet und aus verstärkten Platten (33) sowie aus Versteifungselementen (34, 35) besteht, wobei die verstärkten Platten (33) auf den Versteifungselementen (34, 35) befestigt und/oder in diese eingebaut sind, wobei in Längsrichtung zwischen den mittleren Rahmen (9a, 9b) das untere Abteil (7) an einer Unterseite des Rumpfes, die nach außen offen ist und einen Ausgang (23) des unteren Abteils (7) zur Außenseite des Rumpfes bildet, frei von der Verkleidung (8) ist.

2. Rumpfstruktur eines Hubschraubers nach Anspruch 1,
**dadurch gekennzeichnet, dass** über eine Unterseite des mittleren Bodens (12b) der mittlere Boden (12b) ein Verankerungselement durch Einhängen eines einzuhängenden Materials (16, 17) bildet, welches von außerhalb des Rumpfes durch den Ausgang (23) zugänglich ist.

3. Rumpfstruktur eines Hubschraubers nach Anspruch 2,
**dadurch gekennzeichnet, dass** der mittlere Boden (12b) an seiner Unterseite, die die Decke des unteren Abteils (7) bildet, mit Mitteln (22) zum Haltern durch Einhängen des einzuhängenden Materials (16, 17) versehen ist, unter denen sich mindestens eine der folgenden Vorrichtungen befindet:
- ) mindestens ein Treibstofftank (16),
- ) ein Mittel zum Anlegen von Seilen (17), das dazu bestimmt ist schwere Lasten zu transportieren,
- ) ein Außenlasttransportmittel, das dazu bestimmt ist, leichte Lasten in das untere Abteil (7) einzubringen.

4. Rumpfstruktur eines Hubschraubers nach einem der Ansprüche 1 bis 3,
**dadurch gekennzeichnet, dass** das untere Abteil (7) eingegrenzt ist zwischen dem mittleren Boden (12b) und einer seitlichen Schürze (25), die im Unterbau des Rumpfes angeordnet ist und die Verkleidung (8) verlängert, wobei die Schürze (25) den Ausgang (23) am Rand der freien Kanten der Schürze (8) begrenzt, die an deren unterer, zur Rumpfaußenseite hin offenen Seite angeordnet sind.

5. Rumpfstruktur eines Hubschraubers nach einem der Ansprüche 1 bis 4,
**dadurch gekennzeichnet, dass** die obere Fläche des mittleren Bodens (12b) eine Befestigungsebene eines Technikblindbodens (27) bildet, der aus austauschbaren Platten (28) gebildet wird, unter denen ein Satz Platten (28) jeweils vorausgerüstet ist mit spezifischen Elementen (29) zu Befestigung von Ausrüstungen des Hubschraubers (1), wobei das obere Abteil (6) gemäß verschiedenen Flugaufträgen des Hubschraubers (1) durch selektives Austauschen von Platten (28) eingerichtet werden kann.

6. Rumpfstruktur eines Hubschraubers nach Anspruch 5,
**dadurch gekennzeichnet, dass** die Platten (28) individuell mit den Elementen (29) zur Befestigung von Ausrüstungen des Hubschraubers (1) vorausgerüstet sind, unter denen sich mindestens eine der folgenden Ausrüstungen befindet:
- ) mindestens ein Sitz (31),
- ) mindestens ein Element (30) zur Befestigung einer Fracht,
- ) mindestens ein Geschirr zum Anhängen einer Person,
- ) mindestens eine Konsole mit mindestens einem Rechner und mindestens einem Informationsanzeigebildschirm,
- ) mindestens ein Stecker zur Verbindung mit dem elektrischen Bordnetz des Hubschraubers (1),
- ) mindestens ein Stecker zur Verbindung mit einem Informationskommunikationsnetz des Hubschraubers (1).

7. Rumpfstruktur eines Hubschraubers nach einem der Ansprüche 5 und 6,
**dadurch gekennzeichnet, dass** ein Durchgang (32) für verschiedenste Elemente zwischen der oberen Fläche des mittleren Bodens (12b) und dem Technikblindboden (27) ausgebildet ist.

8. Rumpfstruktur eines Hubschraubers nach einem der Ansprüche 1 bis 7,
**dadurch gekennzeichnet, dass** der Ausgang (23) mit einer abnehmbaren Verschlusswand (24) ausgerüstet ist, die durch ihr Öffnen einen Zugang zum unteren Abteil (12b) erlaubt, wenn der Hubschrauber (1) auf dem Boden steht, und die durch ihre Installation an dem Rumpf den Verschluss des unteren Abteils (7) während des Fluges des Hubschraubers bewirkt.

9. Rumpfstruktur eines Hubschraubers nach Anspruch 8,
**dadurch gekennzeichnet, dass** die Verschlusswand (24) durch eine Gondel gebildet wird, die ein Außenlasttransportmittel aufweist, das durch Aufhängung an der unteren Seite des mittleren Bodens (12b) getragen wird.

10. Rumpfstruktur eines Hubschraubers nach einem der Ansprüche 1 bis 9,
**dadurch gekennzeichnet, dass** der mittlere Boden (12b) aus arbeitenden Platten (33) besteht, die von Versteifungselementen in Form von arbeitenden Querträgern (34) getragen werden, die fest mit mindestens den mittleren Rahmen (9a, 9b) über arbeitende Längsträger (35) fest verbunden sind, die die Querträger (34) miteinander verbinden.

11. Rumpfstruktur eines Hubschraubers nach Anspruch 10,
**dadurch gekennzeichnet, dass** die Platten (33) verstärkte Platten sind, die als Leichtbauplatten ausgeführt sind.

12. Rumpfstruktur eines Hubschraubers nach einem der Ansprüche 10 und 11,
**dadurch gekennzeichnet, dass** die Platten (33) an ihren Rändern in Rinnen eingebaut sind, die mindestens durch die Querträger (34), wenn nicht auch durch die Längsträger (35), gebildet werden.

13. Rumpfstruktur eines Hubschraubers nach einem der Ansprüche 1 bis 12,
**dadurch gekennzeichnet, dass** der mittlere Boden (12b) einen Schutzschild gegenüber dem Eindringen äußerer Elemente in das obere Abteil (6) von außerhalb des oberen Abteils (6) bildet.

14. Hubschrauber (1) mit einer Rumpfstruktur nach einem der Ansprüche 1 bis 13.

## Claims

1. Fuselage structure of a rotorcraft (1) suitable for being extended longitudinally between the front and the rear of the rotorcraft (1) and formed of load-bearing stiffener members and a load-bearing covering (8); the stiffener members comprising load-bearing transverse frames (9a, 9b, 10a, 10b, 10c, 10d) locally delimiting the transverse profile of the fuselage structure and load-bearing longitudinal stiffeners (11a, 11b); the fuselage structure comprising a middle segment (5) suitable for being longitudinally interposed between a cockpit (2) and a tail boom (3) carrying an anti-torque device (4); the fuselage structure comprising a middle floor (12b) and a load-bearing top floor (12a) mounted securely engaged with at least two said load-bearing transverse frames, referred to as middle frames (9a, 9b) incorporated in the middle segment (5); the top floor (12a) providing a top wall suitable for constituting a member for installing at least a main rotor (14) with substantially vertical axis of the rotorcraft; the fuselage structure being fitted with partitioning structures delimiting various compartments in an inside volume of the fuselage structure, including at least: one top compartment (6) having a habitable space function and at least one bottom compartment (7) having a technical space function, the top compartment (6) and the bottom compartment (7) being separated from each other by the middle floor (12b) arranged vertically between the top compartment (6) and the bottom compartment (7); the middle floor (12b) being at least in part overhung by the top floor (12a) and providing at its top face a loading plane in the top compartment (6),
said middle floor (12b) being securely engaged with at least said middle frames (9a, 9b), **characterised in that** the middle floor (12b) forms a load-bearing floor and is formed of reinforced panels (33) as well as stiffener members (34, 35); the reinforced panels (33) being fastened on and/or embedded in the stiffener members (34, 35); longitudinally between the middle frames (9a, 9b), the bottom compartment (7) being free of said covering (8) on a bottom face of the fuselage which is open to the outside by providing an outlet (23) of the bottom compartment (7) to the outside of the fuselage.

2. Rotorcraft fuselage structure according to claim 1,
**characterised in that** via a bottom face of the middle floor (12b), the middle floor (12b) provides a suspension anchor member for equipment to be suspended (16,17) accessible from outside the fuselage through said outlet (23).

3. Rotorcraft fuselage structure according to claim 2,
**characterised in that** the middle floor (12b) is provided at its bottom face, forming the ceiling of the bottom compartment (7), with support means in suspension (22) for supporting said equipment to be suspended (16,17), at least from any one at least of the following pieces of equipment:
- ) at least one fuel tank (16),
- ) slinging equipment (17) dedicated to transporting heavy loads,
- ) winching equipment dedicated to embarking light loads in the bottom compartment (7).

4. Rotorcraft fuselage structure according to any one of claims 1 to 3,
**characterised in that** the bottom compartment (7) is delimited between the middle floor (12b) and a lateral skirt (25) arranged in a substructure of the fuselage to extend the covering (8), said skirt (25) delimiting said outlet (23) at the border of free edges of the skirt (8) arranged at its bottom face open to the outside of the fuselage.

5. Rotorcraft fuselage structure according to any one of claims 1 to 4,
**characterised in that** the top face of the middle floor (12b) forms a plane for fastening a technical false floor (27) composed of interchangeable slabs (28) selected from a set of slabs (28) respectively pre-fitted with fastening members (29) specific to equipment of the rotorcraft (1), the top compartment (6) being suitable for being arranged according to a variety of flight missions of the rotorcraft (1) by selective replacement of the slabs (28).

6. Rotorcraft fuselage structure according to claim 5,
**characterised in that** said slabs (28) are individually pre-fitted with said fastening members (29) for fastening equipment of the rotorcraft (1) at least from any one at least of the following pieces of equipment:
- ) at least one seat (31),
- ) at least one freight attachment member (30),
- ) at least one cord for supporting personnel in suspension,
- ) at least one console comprising at least one computing instrument and at least one information display screen,
- ) at least one socket for connection to an electrical network on board the rotorcraft (1),
- ) at least one socket for connection to an information communication network of the rotorcraft (1).

7. Rotorcraft fuselage structure according to any one of claims 5 and 6,
**characterised in that** a passage (32) for extended elements is provided between the top face of the middle floor (12b) and the technical false floor (27).

8. Rotorcraft fuselage structure according to any one of claims 1 to 7,
**characterised in that** said outlet (23) is provided with a removable shutter wall (24) allowing, by its withdrawal, an access to the bottom compartment (12b) when the rotorcraft (1) is standing on the ground and obtaining, by its installation on the fuselage, the closing of the bottom compartment (7) when the rotorcraft is in flight phase.

9. Rotorcraft fuselage structure according to claim 8,
**characterised in that** said shutter wall (24) is formed by a nacelle comprised by winching equipment carried by suspension at the bottom face of the middle floor (12b).

10. Rotorcraft fuselage structure according to any one of claims 1 to 9,
**characterised in that** the middle floor (12b) is formed by load-bearing panels (33) carried by stiffener members in the form of load-bearing cross-members (34) securely engaged with at least the middle frames (9a,9b) via load-bearing longerons (35) interconnecting the cross-members (34).

11. Rotorcraft fuselage structure according to claim 10,
**characterised in that** said panels (33) are laminated panels arranged as reinforced honeycomb panels.

12. Rotorcraft fuselage structure according to any one of claims 10 and 11,
**characterised in that** said panels (33) are embedded at their edges in channels formed at least by said cross-members (34) if not also by said longerons (35).

13. Rotorcraft fuselage structure according to claims 1 to 12,
**characterised in that** the middle floor (12b) constitutes a shield for protection against intrusion into the top compartment (6) of elements outside said top compartment (6).

14. Rotorcraft (1) comprising a fuselage structure according to any one of claims 1 to 13.
